# EUROPEAN PATENT SPECIFICATION

(11) **EP 0 427 094 B1**
(45) Date of publication and mention of the grant of the patent: **20.04.1994**
(21) Application number: 90120849.6
(22) Date of filing: 31.10.1990
(51) Int. Cl.: C05G 5/00

(54) **Spray dried water dispersible fertilizer**
Sprühgetrocknetes wasserdispergierbares Düngemittel
Engrais séché pour pulvérisation dispersible dans l'eau

(30) Priority: 08.11.1989 US 433647
(43) Date of publication of application: 15.05.1991
(73) Proprietor: W.R. Grace & Co.-Conn., New York, New York 10036 (US)
(72) Inventor: Blouin, John Joseph, Catonsville, MD. 21228 (US)
(74) Representative: UEXKÜLL & STOLBERG

(56) References cited:
- FR-A- 2 168 522

## Description

### BACKGROUND OF THE INVENTION

This invention relates generally to the fertilization and nutrition of growing plants and trees. More specifically, a spray dried delivery system for plant fertilizers is disclosed which allows for the safe and effective delivery of nutrient materials to the foliage of growing plants or trees.

Fertilizers and nutrients often cannot be applied to the foliage, or leaf system, of plants and trees, a delivery route termed foliar fertilization, because of damage that would occur to the plant or leaf. Various chemical compounds or by-products associated with conventional fertilizer compositions will burn or otherwise damage a plant leaf it directly contacts. These conventional fertilizers must be applied to the roots or growing medium, and typically are associated with admonitions to avoid application to or contact with the plant foliage. For example, calcium oxide and zinc dihydrate would burn a leaf upon direct foliar application.

### SUMMARY OF THE INVENTION

The spray dried delivery system of this invention is very effective for enhancing plant nutrition in both horticultural and agricultural applications. The foliar delivery system of this invention comprises a spray dried, homogeneous fertilizer composition which can be applied by dusting the plant or tree leaves, or by dispersing in water for applying to the leaves. The spray dried fertilizer most typically will comprise multiple components useful for enhancing plant health and nutrition.

It is a primary purpose of this invention to provide an economical delivery system for the application of nutrients to the foliage of growing plants and trees in both horticultural and agricultural settings for the enhancement of plant health and nutrition. It is a related objective that the delivery system be easy to handle and apply in either setting. The delivery system of this invention is easily stored and shipped, and can be stored for extended periods in densely packed containers.

Another object of the invention is to provide to the industry a dried foliar fertilizer material which comprises multiple nutrient components in a homogeneous composition.

Still another object is to provide a foliar fertilizer composition which is suitable for applying directly to plant or tree leaves either by dusting or by spraying, and which causes no shock or damage to the leaves or plants. A related object is to provide a foliar fertilizer composition which has been formulated so that it will not introduce chemical components or by-products injurious to the plant.

### DETAILED DESCRIPTION OF THE INVENTION

The invention disclosed herein is a delivery system for applying foliar fertilizers or nutrients to growing plants or trees. The fertilizer is prepared for delivery by: (1) blending the desired nutrient components in an agueous slurry, which may include nucleating agent, and (2) spray drying the slurry. The spray dried fertilizer composition is applied to plant foliage as a dust or dispersed in an aqueous slurry suitable for foliar application. The nutrients are taken into the plants through the leaf system, enhancing the nutrition and health of the plant.

The spray dried foliar delivery system described herein is sufficiently versatile to be applied in both agricultural and horticultural settings. For example, the spray dried product may be applied dry, as a dusting on the leaves of young or mature plants or seedlings which are to be planted. Alternatively, the product may be mixed with water or another liquid to be applied as a spray or mist on the foliage of young or mature plants or seedlings which are to be planted. Other convenient methods of foliar application may be used.

The specific composition of the fertilizer can be adjusted according to its intended application. For each fertilizer composition, the component materials are selected based upon the nutritional and health needs of the plants to which the fertilizer composition will be applied. The composition can be for general use, providing the basic nutritional needs of a large number of plant types. Alternatively, it can be highly specialized, providing particular nutrients or nutrient compositions for certain plant varieties or plants in particular phases of their growth cycle. For example, fruiting trees and flowering plants will have additional nutritional requirements which can be provided via the disclosed delivery system. The proportions of basic nutritional compounds also may be varied, depending on plant life cycle or the environmental conditions under which the fertilizer is to be used.

Certain basic nutrients will be used in most applications of foliar fertilizer. For example, phosphorus is typically added as phosphoric acid, for reasons of economy and stoichiometry. Other ingredients may include calcium, sulfur, zinc, copper, manganese, and/or potassium. Nutrients may be used in the forms commonly utilized in the fertilizer industry. Any desired foliar fertilizer composition may be prepared in the spray dried form which is the subject matter of this invention.

The ingredients may be pre-mixed in the dry state, if desired. It may be desirable, as well, to grind or otherwise process some or all ingredients in order to break up agglomerates or large crystals which may be present. Alternatively, the ingredients may be mixed together with water to form an aqueous slurry, using sufficient mixing or agitation to break up agglomerates and large crystals or other particles. The maximum acceptable particle size is a function of the size of the spray drier nozzle, that is, the ingredients must be of a size which can be fed through the nozzle. This also will vary with different types of nozzles. For example, the slurry may be mixed with a propeller, high shear mixer or other agitator, or may be recirculated through a centrifugal pump. Mixing or pumping is continued for about one to two hours. It is desired to achieve a relatively stable slurry, i.e., a slurry having a settling time of about 4-5 minutes. The apparent viscosity of the slurry preferably is about 500 centipoises. The temperature preferably is below about 40°C.

It may be desired to include a nucleating agent in the slurry as a spray drying aid. The function of the nucleating aid is to provide an attachment site about which the nutrients of the slurry are attracted and held during spray drying to form the particulate spray dried fertilizer material. This results in formation of small individual particles, yielding a product which can be uniformly and efficiently applied. In certain applications, the presence of a nutritive nucleating agent may be desired, as described below. The nucleating agent most conveniently may be added in the mixing step described above, but may be added before or after that step as convenient.

The nucleating agent must be porous. The bulk density of the nucleating agent preferably is 0.8 to 3.0 grams per cubic centimeter. The material must have a particle size which is large enough to settle in air (i.e., in the spray drying system) but small enough or of sufficient porosity to provide adequate surface area for nucleation and attachment of the nutrients. Preferably, the particles are less than 100 micrometers (microns) in diameter. The nucleating agent may be an inert particulate substance such as diatomaceous earth, activated carbon, silica, alumina, or silica-alumina, or a mixture thereof. Alternatively, a nutritive base may be used as the nucleating agent. For example, ground bran, chitin or other cellulose-based substances such as corn cobs, peanut hulls and the like, or a mixture thereof, may be used.

Dry nucleating agent may be added to the nutrient slurry. Alternatively, the agent may be slurried prior to addition, if desired. The nucleating agent and nutrients are thoroughly mixed to uniformity under ambient conditions. Typically, the nucleating agent is present as about 2.0 to about 10.0% of the slurry. On a dry weight basis, there may be about 0.2 to about 5.0 grams of nucleating agent per gram of total active solids (i.e., nutrient).

The nutrient slurry is spray dried under suitable conditions to form a free-flowing, dried particulate material. The color and the particle shape and size of the spray dried material will vary, depending on the nutrient components and nucleating agent used. A slurry of sufficient fluidity to be conveniently fed into the spray drier is used. Preferably, the maximum solids content is about 40.0 wt.%.

Spray driers appropriate for use in preparation of this product operate by atomizing the feed solution to form a spray of droplets. The droplets are mixed with hot gases to evaporate the liquid, resulting in an amorphous spray dried product. The gases and spray dried fertilizer composition are removed from the drier and the solids are separated from the gas.

Several types of atomizing nozzles will be suitable for use in preparing these dried biocontrol compositions. A two-fluid nozzle will be most preferred, although a mechanical atomizer, such as a spinning disk nozzle (centrifugal atomizer) may also be used. The pressure of the feed solution through the nozzle will depend on the nozzle design and the desired droplet size. The preferred droplet size is about 25 micrometers (microns), but will vary with the nozzle type, drier type and drier temperature. The selection of these parameters, and the rate of feed of the cell mass through the nozzle, will be within the knowledge and ability of the process designer and will be specifically tailored for each situation to produce an amorphous, particulate spray dried material.

The gas used in the spray drier may be any gas inert to the feed solution but typically will be either air or nitrogen. Preferably, the gas is filtered (for example, through a HEPA filter) prior to delivery to the spray drier, to remove contaminants. The gas is heated to a desired temperature before being fed or injected into the drier. The temperature of the gas inside the drier is critical in order to achieve the desired product: an amorphous composition meeting product specifications for total volatiles content. The process described here will result in a product dried to a total volatiles content of about 5.0 to about 15.0 wt.%, preferably about 7.0 to about 10.0 wt.%.

The total volatiles content of the spray dried foliar fertilizer is important both for its handling and its utility. Total volatiles above the target range would signal too wet a material which would tend to harden when stored, making application, particularly as a dust, difficult or impossible. A total volatiles content below the target range would result in an unacceptable stoichiometry of the zinc and calcium components. At lower total volatiles, the calcium would form an oxide which would burn the foliage upon application. The zinc would take on the dihydrate (instead of tetrahydrate) form, which also would burn the foliage.

The internal gas temperature of the spray drier most conveniently may be adjusted with reference to the gas outlet temperature, which is easily measured. By this method, the outlet temperature is maintained within the desired operational range by means of incremental adjustments to the gas inlet temperatures. In another embodiment, the temperature may be controlled by measuring and adjusting the inlet temperature and/or mixing in a stream of colder gas as well.

The minimum outlet temperature should be about 104 to about 110°C. Temperatures below this will tend to result in a wet, clumped product. lt is desired to get a free flowing product. The maximum outlet temperature should be about 115 to about 125°C, most preferably not higher than about 115°C. Temperatures above this will cause "scorching" and discoloration of the product. The most preferred gas outlet temperature range is about 105 to about 110°C. It may be desired to inject cool gas (e.g., air and/or nitrogen) at the outlet of the drier in order to prevent overheating of the product in the separation and recovery area. Maximum inlet temperature will be a function of the individual drier.

The dried product is separated from the drying gases, preferably within the drier itself, although not necessarily in the drying chamber. Separation is by conventional means. For example, internal separation based on the density differential is a suitable method. It also will be possible to conduct the product and gas to a separate collection system, as long as appropriate precautions are taken to prevent product contamination. For example, the gas and dried material may be conducted aseptically to a cyclone separator or bag house. The precise means of separation will be within the knowledge and skill of the process designer.

The dried fertilizer product may be packaged into any container which is suitable for storage and shipment. Dense packing is possible with the spray dried material of this invention. Packaging materials and design should be adequate to maintain the low moisture content of the packaged product for its anticipated shelf life.

The spray dried fertilizer product of this invention is an amorphous, free-flowing substance. The composition typically is in the form of randomly shaped particles with an average particle size of about 10.0 to about 25.0 micrometers (microns) in diameter. The particles typically are light in color (tan to off-white) with the precise color depending on the particular ingredients of which the fertilizer is comprised.

As mentioned above, the spray dried material may be applied to plant or tree foliage as a dust. Alternatively, the spray dried material may be dissolved in water or other liquid and applied to the foliage in slurry or solution form, for example, by spraying or misting. Applications may be at any desired rate, preferably about 0.56 g to about 2.24 g per square meter (about 5 to about 20 pounds per acre), preferably about 1.12 g to about 1.68 g per square meter (about 10 to 15 pounds per acre). Multiple application protocols may be used, with applications before and/or during the relevant growing season.

The examples which follow are given for illustrative purposes and are not meant to limit the invention described therein. The following abbreviations have been used throughout in describing the invention:
- °C -: degree(s) Centigrade
- m² (ft²) -: square meter(s) (square foot (feet))
- gm -: gram(s)
- l/min (gpm) -: litre(s) per minute (gallons per minute)
- hr -: hour(s)
- L -: liter(s)
- g (lb.) -: gram(s) (pound(s)
- M -: molar
- mg -: milligram(s)
- ml -: milliliter(s)
- µm (µ) -: micrometers (micron(s))
- % -: percent
- kp/cm² (psig) -: kilopond(s) per square centimetre (pound(s) per square inch gauge)
- TV -: total volatiles
- wt. -: weight

### EXAMPLE I

The following materials were added, in sequence, to a 25 gallon (95 L) stainless steel agitated hemispherical tank:
33.43 lb. (15,177.0 g ) deionized water
4.41 lb. (2,002.0 g ) 85% phosphoric acid
3.97 lb. (1,802.0 g ) zinc sulfate
3.84 lb. (1,743.0 g ) calcium hydroxide
4.52 lb. (2,052.0 g ) mono-calcium phosphate
6.00 lb. (2,724.0 g ) deionized water rinse.
The materials were mixed in the tank with a standard propeller agitator for 30 minutes. The tank contents then were recirculated through a centrifugal pump at 15.1 ℓ/min (4.0 gpm) for an additional 30 minutes to break up loose agglomerates and reduce the particle size of gypsum (CaSO₄.2H₂O) crystals formed from zinc sulfate and calcium hydroxide. After the pumping period, the slurry was stable with a settling time of 4-5 minutes and a viscosity of 300 centipoises. The pH was 6.8. The temperature during the pumping operation was allowed to drift up to 100°F (37-38°C) and was maintained there by adding a heat exchanger in the recirculating loop and controlling the outlet temperature.

The slurry was maintained with good agitation during the remainder of the processing. The slurry was pumped to a Bowen Engineering Laboratory No. BE 499 spray drier, operated in a concurrent mode. Atomization was accomplished with an air driven two-fluid nozzle run at a pressure of 2.1 kp/cm² (30.0 psig). The feed rate of the slurry was 100 grams per minute. The spray drier was operated at an inlet hot air temperature of 470-500°F (243-260°C); the outlet temperature was 220 to 227°F (104-108°C). The total volatiles (measured at 200°C) of the spray dried material was about 8.88 wt.%. The material was free-flowing and had a particle size of approximately 20.0 microns.

A sample of this material was applied to apple trees by dusting the foliage. Approximately 1.12-2.24 g/cm² (10-20 lb./acre) of the material were used in two pre-bloom and three post-bloom applications. The plants were studied for several months, with acceptable growth and no leaf damage reported.

### EXAMPLE II

The following materials were added, in sequence, to the tank used in Example I:
80.00 lb. (36,320.0 g ) deionized water
3.74 lb. (1,698.0 g ) 85% phosphoric acid
3.35 lb. (1,521.0 g ) copper sulfate mono-hydrate
1.12 lb. (508.0 g ) monocalcium phosphate mono-hydrate
2.47 lb. (1,121.0 g ) zinc oxide
6.46 lb. (2,933.0 g ) gypsum
The materials were mixed and spray dried according to the procedures of Example I. The total volatiles content of the spray dried fertilizer was 10.4 wt.%. The spray dried composition was off-white in color and was free-flowing, with particles about 20.0µm. X-ray diffraction was used to confirm that the desired stoichiometry had been obtained. This formulation was dusted on foliage to test for leaf damage; none was found to occur.

### EXAMPLE III

A field test was conducted using the spray dried fertilizer of this invention. Spray dried fertilizer was prepared as in Example I. An apple orchard was treated with this spray dried fertilizer in five applications during the growing season as follows:

| **Application** | **Rate** | **Stage** |
|---|---|---|
| 1 | 1,68 g/m² (15 lb./acre) | pre-bloom |
| 2 | 1,12 g/m² (10 lb./acre) | pre-bloom |
| 3 | 1,12 g/m² (10 lb./acre) | post-bloom |
| 4 | 1,12 g/m² (10 lb./acre) | post-bloom |
| 5 | 1,12 g/m² (10 lb./acre) | post-bloom |

The spray dried fertilizer was slurried at a rate of 0.094 ℓ/m² (100 gallons per acre). Application was by standard orchard spraying (tank truck equipped with sprayer and a large fan to blow the aerosol over the trees). Trees treated in this manner exhibited excellent blooms and fruit production.

The principles, preferred embodiments and modes of operation of the present invention have been described in the foregoing specification. The invention which is intended to be protected herein, however, is not to be construed as limited to the particular forms disclosed, since these are to be regarded as illustrative rather than restrictive.

## Claims

1. A spray dried foliar fertilizer composition comprising nutritive compounds effective for enhancing plant nutrition and health, characterized in that the composition is an amorphous free-flowing substance comprising particles having diameters of 10.0 to 25.0 micrometers, the composition having a total volatiles content of 5.0 to 15.0 weight percent.

2. The composition of claim 1 in which said total volatiles content is 7.0 to 10.0 wt.%.

3. The composition of claim 1 or 2 which also comprises a particulate nucleating agent.

4. The composition of claim 3 in which said nucleating agent is inert.

5. The composition of claim 4 in which said nucleating agent is ground or particulate diatomaceous earth, activated carbon, silica, alumina, silica-alumina or a mixture thereof.

6. The composition of claim 3 in which said nucleating agent is nutritive.

7. The composition of claim 6 in which said nucleating agent is bran, chitin, corn cobs, peanut hulls, or a mixture thereof.

8. A method for the preparation of a foliar fertilizer composition characterized in that a suspension of hydrated nutritive compounds is spray dried to give an amorphous, free-flowing substance having a total volatiles content of 5.0 to 15.0 wt.%.

9. The method of claim 8 in which said suspension comprises a particulate nucleating agent.

10. A method of enhancing plant nutrition and health by applying to the foliage of said plant a spray-dried fertilizer composition comprising nutritive compounds effective for enhancing plant nutrition and health, said spray-dried composition having a total volatiles content of 5.0 to 15.0 wt.%.

11. The method of claim 10 in which said spray-dried fertilizer composition is applied by dusting on said foliage.

12. The method of claim 11 in which an aqueous suspension of said spray-dried fertilizer composition is applied to said foliage.

13. The method of claims 10 to 12 in which said spray-dried composition is applied to said foliage in amounts of 1.12 to 2.24 grams per square meter.

14. The method of claims 10 to 13 in which a multiple application protocol is followed.

## Patentansprüche

1. Sprühgetrocknete Blattdünger-Zusammensetzung, die wirksame Nährstoffverbindungen zur Verbesserung der Ernährung und Gesundheit von Pflanzen umfaßt, dadurch gekennzeichnet, daß die Zusammensetzung eine amorphe, rieselfähige Substanz ist, die Partikel mit einem Durchmesser von 10,0 bis 25,0 µm umfaßt, wobei die Zusammensetzung einen Gesamtgehalt an flüchtigen Bestandteilen von 5,0 bis 15,0 Gew.% besitzt.

2. Zusammensetzung nach Anspruch 1, bei der der Gesamtanteil an flüchtigen Bestandteilen 7,0 bis 10,0 Gew.% beträgt.

3. Zusammensetzung nach Ansprüchen 1 oder 2, die ferner ein partikuläres keimbildendes Mittel umfaßt.

4. Zusammensetzung nach Anspruch 1, bei der das keimbildende Mittel inert ist.

5. Zusammensetzung nach Anspruch 4, bei der das keimbildende Mittel gemahlene oder partikuläre Diatomeenerde, Axtivkohle, Siliciumdioxid, Aluminiumoxid, Siliciumdioxid-Aluminiumoxid oder eine Mischung davon ist.

6. Zusammensetzung nach Anspruch 3, bei der das keimbildende Mittel ein Nährstoff ist.

7. Zusammensetzung nach Anspruch 6, bei der das keimbildende Mittel Kleie, Chitin, Maiskolben, Erdnußschalen oder eine Mischung davon ist.

8. Verfahren zur Herstellung einer Blattdünger-Zusammensetzung, dadurch gekennzeichnet, daß eine Suspension hydratisierter Nährstoff-Verbindungen sprühgetrocknet wird, wobei eine amorphe, rieselfähige Substanz mit einem Gesamtanteil an flüchtigen Bestandteilen von 5,0 bis 15,0 Gew.% erhalten wird.

9. Verfahren nach Anspruch 8, bei dem die Suspension ein partikuläres keimbildendes Mittel umfaßt.

10. Verfahren zur Verstärkung der Ernährung und Gesundheit von Pflanzen durch Aufbringen einer sprühgetrockneten Dünger-Zusammensetzung auf die Blätter der Pflanze, welche wirksame Nährstoff-Verbindungen zur Verbesserung der Ernährung und Gesundheit der Pflanze enthält, wobei die sprühgetrocknete Zusammensetzung einen Gesamtgehalt an flüchtigen Bestandteilen von 5,0 bis 15,0 Gew.% besitzt.

11. Verfahren nach Anspruch 10, bei dem die sprühgetrocknete Dünger-Zusammensetzung durch Zerstäuben auf die Blätter aufgebracht wird.

12. Verfahren nach Anspruch 11, bei dem eine wässrige Suspension der sprühgetrockneten Dünger-Zusammensetzung auf die Blätter aufgebracht wird.

13. Verfahren nach Ansprüchen 10 bis 12, bei dem die sprühgetrocknete Zusammensetzung in einer Menge von 1,12 bis 2,24 g pro Quadratmeter auf die Blätter aufgebracht wird.

14. Verfahren nach Ansprüchen 10 bis 13, bei dem man einem Protokoll mehrfacher Anwendungen folgt.

## Revendications

1. Composition d'engrais foliaire séché pour pulvérisation comprenant des composés nutritifs efficaces pour augmenter la nutrition et la santé de plantes, caractérisée en ce que la composition est une substance amorphe meuble comprenant des particules d'un diamètre de 10,0 à 25,0 µm, la composition ayant une teneur totale en produits volatils de 5,0 à 15,0% en poids.

2. Composition suivant la revendication 1, dans laquelle la teneur totale en produits volatils se situe de 7,0 à 10,0% en poids.

3. Composition suivant la revendication 1 ou 2, qui comprend aussi un agent de nucléation particulaire.

4. Composition suivant la revendication 3, dans laquelle l'agent de nucléation est inerte.

5. Composition suivant la revendication 4, dans laquelle l'agent de nucléation est de la terre de diatomées, du carbone activé, de la silice, de l'alumine, de la silice-alumine broyés ou particulaires ou un mélange de ceux-ci.

6. Composition suivant la revendication 3, dans laquelle l'agent de nucléation est nutritif.

7. Composition suivant la revendication 6, dans laquelle l'agent de nucléation est du son, de la chitine, du rafle de maïs, des coques d'arachides ou un mélange de ceux-ci.

8. Procédé de préparation d'une composition d'engrais foliaire, caractérisé en ce qu'une suspension de composés nutritifs hydratés est pulvérisée à sec pour donner une substance meuble amorphe ayant une teneur totale en produits volatils de 5,0 à 15,0% en poids.

9. Procédé suivant la revendication 8, dans lequel la suspension comprend un agent de nucléation particulaire.

10. Procédé d'amélioration de la nutrition et de la santé de plantes par application sur le feuillage de la plante d'une composition d'engrais séché pour pulvérisation, comprenant des composés nutritifs efficaces pour améliorer la nutrition et la santé de la plante, la composition séchée pour pulvérisation ayant une teneur totale en produits volatils de 5,0 à 15,0% en poids.

11. Procédé suivant la revendication 10, dans lequel la composition d'engrais pour pulvérisation est appliquée par saupoudrage du feuillage.

12. Procédé suivant la revendication 11, dans lequel une suspension aqueuse de la composition d'engrais séché pour pulvérisation est appliquée au feuillage.

13. Procédé suivant les revendications 10 à 12, dans lequel la composition séchée pour pulvérisation est appliquée au feuillage en des quantités de 1,12 à 2,24 g par m².

14. Procédé suivant les revendications 10 à 13, dans lequel un protocole d'application multiple est suivi.
